(19) Europäisches Patentamt
European Patent Office
Office européen des brevets

(11) EP 3 524 655 A1

(12) **EUROPEAN PATENT APPLICATION**
published in accordance with Art. 153(4) EPC

(43) Date of publication:
**14.08.2019 Bulletin 2019/33**

(21) Application number: **17858286.2**

(22) Date of filing: **28.09.2017**

(51) Int Cl.:
***C09K 3/00*** *(2006.01)* ***B32B 27/00*** *(2006.01)*
***C08L 83/07*** *(2006.01)*

(86) International application number:
**PCT/JP2017/035208**

(87) International publication number:
**WO 2018/066448 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.10.2016 JP 2016198226**

(71) Applicant: **Shin-Etsu Chemical Co., Ltd.**
**Tokyo 100-0004 (JP)**

(72) Inventors:
- **ONOZAWA, Hayato**
**Annaka-shi**
**Gunma 379-0224 (JP)**
- **NAKAJIMA, Tsutomu**
**Annaka-shi**
**Gunma 379-0224 (JP)**

(74) Representative: **Mewburn Ellis LLP**
**City Tower**
**40 Basinghall Street**
**London EC2V 5DE (GB)**

# (54) SILICONE COMPOSITION FOR RELEASE PAPER OR RELEASE FILM

(57) A silicone composition for release paper or release films which comprises (A) an organopolysiloxane having at least two alkenyl groups in the molecule, (B) an organohydrogenpolysiloxane having, in the molecule, at least three hydrogen atoms each bonded to a silicon atom, (C) a platinum-group metal catalyst, (D) an organic solvent, (E) an ionic compound, and (F) a compound (F-1), which has (f1) and (f3), a compound (F-2), which has (f2) and (f3), or a compound (F-3), which has (f1), (f2), and (f3): (f1) is a group capable of undergoing hydrosilylation; (f2) is a polysiloxane structure; and (f3) is a polyoxyethylene chain.

EP 3 524 655 A1

## Description

TECHNICAL FIELD

This invention relates to an antistatic silicone composition for release paper or release film.

BACKGROUND ART

It is known that a releasable coating to a sticky or pressure-sensitive adhesive material, which is obtained by coating a silicone-base release agent to the surface of a substrate such as paper sheet or plastic film, and effecting crosslinking reaction to form a cured coating, is used as release paper or film. Of these, the release film having a silicone-base release agent coated to the surface of a plastic material substrate is used in the optical application and electronic/electric part application.

Nevertheless, the substrate tends to be readily electrically charged and more readily charged when coated with a silicone-base release agent. Electrostatic charges build up by friction and peeling, giving rise to such problems as charging of pressure-sensitive adhesive, adsorption of foreign particles, and working inefficiency. It is thus required to endow the release film with antistatic properties.

An antistatic release film is known comprising a substrate, an antistatic layer containing metal nanoparticles or π conjugated electroconductive polymer disposed on the substrate, and a silicone resin-containing release agent layer disposed on the antistatic layer. In this case, however, since the antistatic layer and the release agent layer are separately formed, plural coating steps are involved to add to the cost. Also, since the antistatic layer using metal nanoparticles has a high haze, the release film is inadequate in the optical application.

Thus an attempt to incorporate an antistatic agent in a release agent for imparting antistatic properties thereto has been studied. As the antistatic agent, ion conductive compounds such as surfactants are widely used. The ion conductive compounds have the problems of fluctuating antistatic properties because their humidity-dependent conductivity, and bleed-out from the release agent layer. The other antistatic agent is a π conjugated conductive polymer having non-humidity-dependent conductivity and undergoing no bleed-out. Patent Document 1: JP 2636968 proposes a water dispersion of a π conjugated conductive polymer to which polyanion is added as a dopant-and-surfactant. Also Patent Document 2: JP-A 2002-241613 proposes a release film using a release agent containing an addition curable silicone emulsion and a thiophene base conductive polymer.

However, the silicone emulsion was difficult to use in the antistatic release film application because it is less bondable to substrates and contains a large amount of water, which can cause corrosion to the coating tool.

It was then considered to use a non-aqueous conductive polymer dispersion instead of the water dispersion. As the non-aqueous conductive polymer dispersion, Patent Document 3: WO 2005/052058 discloses an organic solvent solution of polyaniline. Further, Patent Document 4: JP-A 2006-249303, Patent Document 5: JP-A 2007-254730, and Patent Document 6: JP-A 2008-045061 disclose an organic solvent dispersion which is obtained from a water dispersion containing a π conjugated conductive polymer and polyanion by replacing water by an organic solvent. Patent Document 7: JP-A 2011-032382 discloses an organic solvent dispersion which is obtained by freeze drying a water dispersion of a π conjugated conductive polymer and polyanion and dissolving the dry solids in an organic solvent.

Although a composition obtained by mixing the organic solvent solution of Patent Document 3 with a silicone base release agent has been solubilized depending on a choice of the solvent, the silicone base release agent and the complex of π conjugated conductive polymer and polyanion separate apart during drying, failing to achieve the desired antistatic and release properties.

When a silicone base release agent is merely mixed with the organic solvent solution of Patent Documents 4 to 7, the silicone base release agent is not compatible with the complex of π conjugated conductive polymer and polyanion, making it difficult to achieve the desired antistatic and release properties. While hydrosilylation reaction is generally utilized as the silicone curing reaction, the procedure of mixing a silicone base release agent with the organic solvent solution of Patent Documents 4 to 7 and heating the mixture encounters the problem that hydrosilylation reaction is inhibited, the silicone is not cured, and thus no release agent layer is formed.

PRIOR ART DOCUMENTS

PATENT DOCUMENTS

Patent Document 1: JP 2636968

Patent Document 2: JP-A 2002-241613

Patent Document 3: WO 2005/052058

Patent Document 4: JP-A 2006-249303

Patent Document 5: JP-A 2007-254730

Patent Document 6: JP-A 2008-045061

Patent Document 7: JP-A 2011-032382

Patent Document 8: JP-A 2016-027128

## SUMMARY OF THE INVENTION

### TECHNICAL PROBLEM

An object of the invention, which has been made under the above-mentioned circumstances, is to provide a silicone composition for release paper or release film, having improved antistatic and release properties as well as satisfactory safety and cure behavior.

### SOLUTION TO THE PROBLEM

The inventors found that a cured release agent layer can be formed by selecting a silicone base release agent of the condensation cure type that is unsusceptible to cure inhibition, and mixing it with an organic solvent dispersion of the complex of $\pi$ conjugated conductive polymer and polyanion. However, there are left the problem of safety of a tin compound used as a cure catalyst and the problem of a slow cure speed as compared with the hydrosilylation reaction.

Making further investigations, the inventors have found that by blending a conventional silicone composition for release paper or release film with (F-1) a compound having (f1) hydrosilylation reactive group and (f3) polyoxyethylene chain, (F-2) a compound having (f2) polysiloxane structure and (f3) polyoxyethylene chain, or (F-3) a compound having (f1) hydrosilylation reactive group, (f2) polysiloxane structure and (f3) polyoxyethylene chain, there is obtained a silicone composition for release paper or release film, having improved antistatic and release properties as well as satisfactory safety and cure behavior.

Accordingly, the invention is as defined below.

[1] A silicone composition for release paper or release film, comprising

(A) 100 parts by weight of an organopolysiloxane containing at least two alkenyl groups per molecule and having an alkenyl content of 0.001 to 0.2 mol/100 g and a 30 wt% toluene dilution viscosity at 25°C of 0.01 to 70 Pa·s,
(B) an organohydrogenpolysiloxane containing at least three silicon-bonded hydrogen atoms per molecule, represented by the average compositional formula (1), in such an amount that the moles of silicon-bonded hydrogen atoms is 0.5 to 70 times the moles of alkenyl groups in component (A),

$$R^1_aH_bSiO_{(4-a-b)/2} \qquad (1)$$

wherein $R^1$ which may be the same or different is a substituted or unsubstituted monovalent hydrocarbon group free of aliphatic unsaturation, a is a positive number of 0.1 to 2, b is a positive number of 0.1 to 3, a+b is a positive number of 1 to 3, a and b are selected such that the organohydrogenpolysiloxane contains at least three SiH groups per molecule and has a viscosity in the range of 0.005 to 10 Pa·s at 25°C,
(C) a catalytic amount of a platinum group metal catalyst,
(D) 0 to 100,000 parts by weight of an organic solvent,
(E) 0.1 to 10 parts by weight of an ionic compound, and
(F) 1 to 30 parts by weight of a compound selected from the following (F-1), (F-2) and (F-3):

(F-1) a compound having (f1) and (f3),
(F-2) a compound having (f2) and (f3), and
(F-3) a compound having (f1), (f2) and (f3),

wherein (f1) is a hydrosilylation reactive group, (f2) is a polysiloxane structure, and (f3) is a polyoxyethylene chain.

[2] The silicone composition for release paper or release film of [1] wherein component (B) is present in such an amount that the moles of silicon-bonded hydrogen atoms is 3 to 60 times the moles of alkenyl groups in component (A).

[3] The silicone composition for release paper or release film of [1] or [2], further comprising (G) a migratory component.

[4] A release paper or release film comprising a paper or film substrate and a release layer formed on the substrate, the release layer being a cured product of the silicone composition of any one of [1] to [3].

## ADVANTAGEOUS EFFECTS OF THE INVENTION

According to the invention, there is provided a silicone composition for release paper or release film, having improved antistatic and release properties as well as satisfactory safety and cure behavior.

## DESCRIPTION OF EMBODIMENTS

Now the invention is described in detail.

The silicone composition for release paper or release film (sometimes abbreviated as silicone composition, hereinafter) of the invention is a silicone composition comprising the following components (A) to (F) and adapted to cure through addition reaction.

### Component (A)

Component (A) is an organopolysiloxane containing at least two alkenyl groups per molecule and having an alkenyl content of 0.001 to 0.2 mol/100 g and a 30 wt% toluene dilution viscosity at 25°C of 0.01 to 70 Pa·s, preferably represented by the general formula (2).

[Chem. 1]

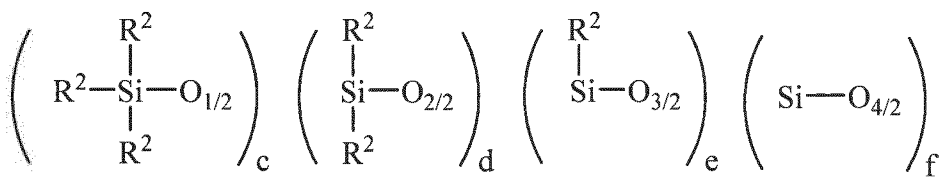

(2)

In formula (2), $R^2$ which may be the same or different is a substituted or unsubstituted monovalent hydrocarbon group of 1 to 20 carbon atoms free of aliphatic unsaturation, or an alkenyl group of 2 to 12 carbon atoms which may have an intervening oxygen atom, at least two of groups $R^2$ are alkenyl.

Typical of the $C_1$-$C_{20}$ monovalent hydrocarbon group free of aliphatic unsaturation are monovalent hydrocarbon groups of 1 to 10 carbon atoms including alkyl groups of preferably 1 to 6 carbon atoms, such as methyl, ethyl, propyl and butyl, cycloalkyl groups of preferably 5 to 8 carbon atoms, such as cyclohexyl, aryl groups of preferably 6 to 10 carbon atoms, such as phenyl and tolyl, aralkyl groups of preferably 7 to 10 carbon atoms, such as benzyl, and the foregoing groups in which one or more or all carbon-bonded hydrogen atoms are substituted by hydroxyl, alkoxy, polyether, alkoxyalkyl, epoxy, halogen or the like, such as hydroxypropyl, chloropropyl, and 3,3,3-trifluoropropyl. Especially from the standpoint of releasability, alkyl and aryl groups are preferred, with methyl, ethyl, propyl and phenyl being more preferred.

The alkenyl group of 2 to 12 carbon atoms which may have an intervening oxygen atom is preferably selected from groups having the formula: $-(CH_2)_n-CH=CH_2$ wherein n is 0 or an integer of 1 to 10, such as vinyl, propenyl, butenyl, hexenyl, octenyl and decenyl. Inter alia, vinyl is preferred.

The organopolysiloxane as component (A) contains at least two alkenyl groups per molecule. If the number of alkenyl groups is less than 2, there is a strong possibility that non-crosslinked molecules are left after cure, indicating a lowering of curability. The content of alkenyl groups per 100 g of the organopolysiloxane (A) is preferably 0.001 to 0.2 mole, more preferably 0.002 to 0.15 mole. An alkenyl content of less than 0.001 mole may invite a lowering of curability whereas a content in excess of 0.2 mole may invite tightening of release and hence, release failure.

Component (A) has a viscosity at 25°C of 0.01 to 70 Pa·s as measured in a 30 wt% toluene solution, preferably 0.01 to 50 Pa·s as measured in a 30 wt% toluene solution. If the viscosity is less than 0.01 Pa·s, the resulting composition is inefficiently coatable. If the viscosity exceeds 70 Pa·s, the resulting composition is poorly workable. It is noted that

the viscosity is measured by a rotational viscometer (the same holds true, hereinafter).

In formula (2), c, d, e and f are selected from positive numbers so as to give a viscosity in the above-defined range. Specifically, c is an integer of at least 2, preferably 2 to 300, d is an integer of at least 100, preferably 200 to 20,000, e is an integer of at least 0, preferably 0 to 100, f is an integer of at least 0, preferably 0 to 100, and 150 ≤ c+d+e+f ≤ 20,000, preferably 200 ≤ c+d+e+f ≤ 15,000.

Examples of component (A) are given below, but not limited thereto. In the formulae, Me, Vi, and Ph stand for methyl, vinyl, and phenyl, respectively.

[Chem. 2]

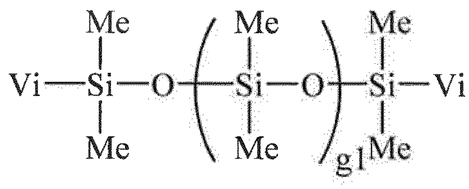

(150 ≤ g1 ≤ 2,500)

[Chem. 3]

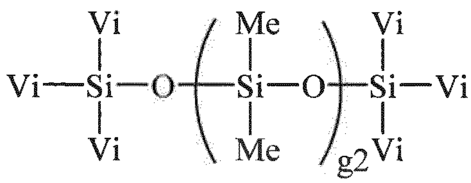

(150 ≤ g2 ≤ 10,000)

[Chem. 4]

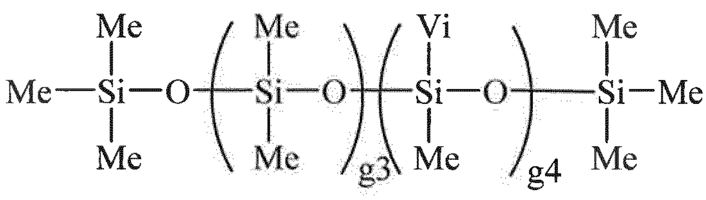

(150 ≤ g3 ≤ 19,000, 2 ≤ g4 ≤ 500)

[Chem. 5]

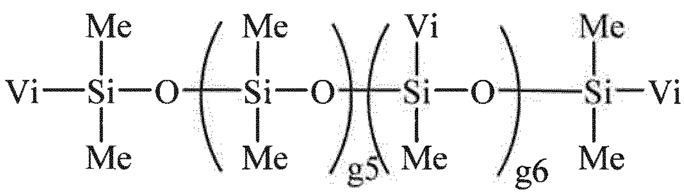

(150 ≤ g5 ≤ 19,000, 1 ≤ g6 ≤ 500)

[Chem. 6]

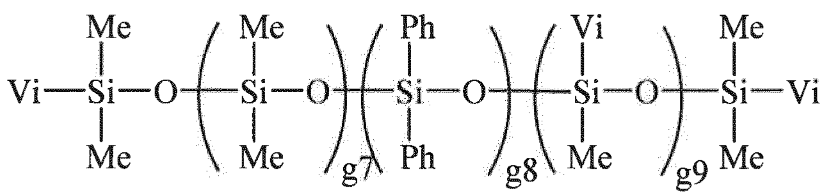

(150 ≤ g7 ≤ 19,000, 1 ≤ g8 ≤ 500, 1 ≤ g9 ≤ 500)

[Chem. 7]

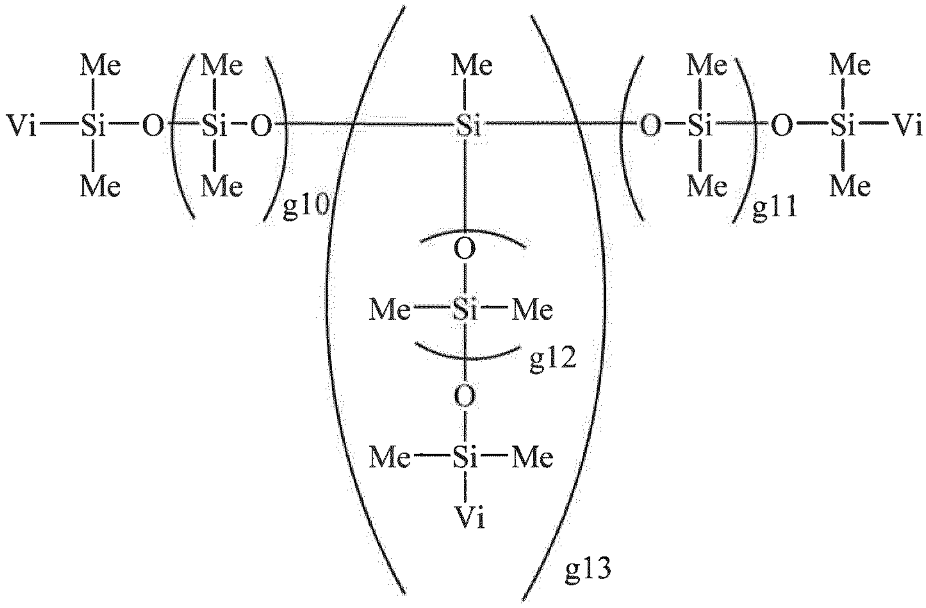

(150 ≤ g10 ≤ 5,000, 0 ≤ g11 ≤ 5,000, 0 ≤ g12 ≤500, 0 ≤ g13 ≤ 100)

[Chem. 8]

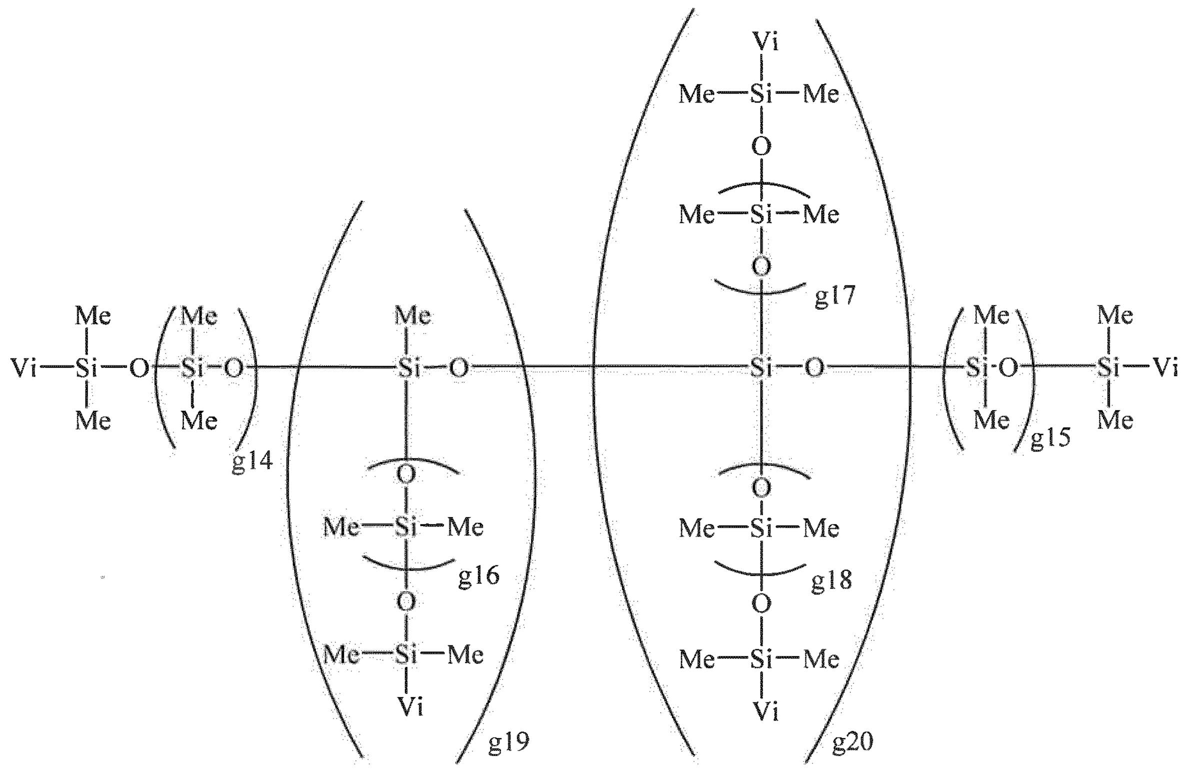

($150 \leq g14 \leq 5,000$, $0 \leq g15 \leq 5,000$, $0 \leq g16 \leq 500$, $0 \leq g17 \leq 500$, $0 \leq g18 \leq 500$, $0 \leq g19 \leq 100$, $0 \leq g20 \leq 100$)

Component (B)

Component (B) is an organohydrogenpolysiloxane containing at least three silicon-bonded hydrogen atoms (also referred to as "SiH group," hereinafter) per molecule, represented by the average compositional formula (1).

$$R^1_aH_bSiO_{(4-a-b)/2} \qquad (1)$$

Herein $R^1$ which may be the same or different is a substituted or unsubstituted monovalent hydrocarbon group free of aliphatic unsaturation, a is a positive number of 0.1 to 2, preferably 0.2 to 1.5, b is a positive number of 0.1 to 3, preferably 0.2 to 2, a+b is a positive number of 1 to 3, preferably 0.5 to 2.7, a and b are selected such that the viscosity at 25°C falls in the range of 0.005 to 10 Pa·s.

In formula (1), $R^1$ is a substituted or unsubstituted monovalent hydrocarbon group free of aliphatic unsaturation. Examples include alkyl groups of preferably 1 to 6 carbon atoms, such as methyl, ethyl, propyl and butyl, cycloalkyl groups of preferably 5 to 8 carbon atoms, such as cyclohexyl, aryl groups of preferably 6 to 10 carbon atoms, such as phenyl and tolyl, aralkyl groups of preferably 7 to 10 carbon atoms, such as benzyl, and the foregoing groups in which one or more or all carbon-bonded hydrogen atoms are substituted by hydroxyl, alkoxy, polyether, alkoxyalkyl, epoxy, halogen or the like, such as hydroxypropyl, 1-chloropropyl, and 3,3,3-trifluoropropyl. Among these, alkyl and aryl groups are preferred, with methyl being more preferred from the standpoint of increasing the addition reaction rate.

Examples of the organohydrogenpolysiloxane having formula (1) include polymers or copolymers comprising at least one of $R^1HSiO_{2/2}$ units (wherein $R^1$ is as defined above, the same holds true hereinafter), $HSiO_{3/2}$ units, and $R^1_2HSiO_{1/2}$ units, and optionally further containing at least one of $R^1_2SiO_{2/2}$ units, $R^1SiO_{3/2}$ units, and $R^1_3SiO_{1/2}$ units, preferably at least 3, more preferably 10 to 100 $R^1HSiO_{2/2}$ units and/or $R^1_2HSiO_{1/2}$ units in total being included per molecule. Also, $SiO_{4/2}$ units may be included as long as the benefits of the invention are obtainable.

Notably, the content of SiH groups is preferably 0.1 to 3 moles/100 g, more preferably 0.2 to 2 moles/100 g of the organopolysiloxane.

The organohydrogenpolysiloxane may be linear, branched or cyclic, or a mixture thereof.

Examples of component (B) are given below, but not limited thereto. In the formulae, Ph stands for phenyl.

[Chem. 9]

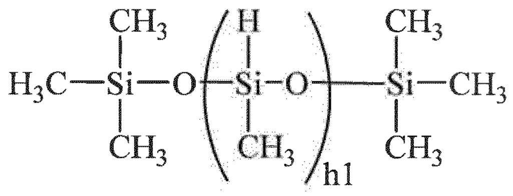

(3 ≤ h1 ≤ 100)

[Chem. 10]

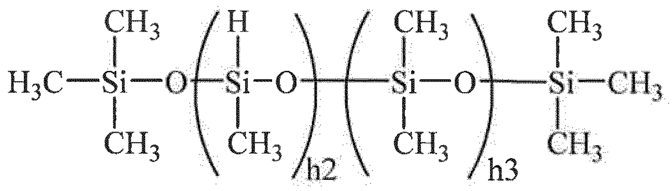

(3 ≤ h2 ≤ 100, 0 ≤ h3 ≤ 500)

[Chem. 11]

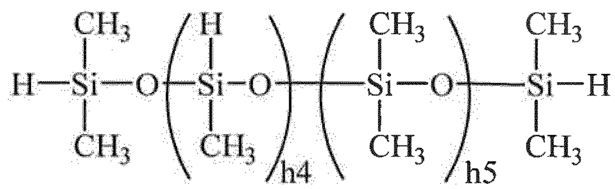

(1 ≤ h4 ≤ 100, 0 ≤ h5 ≤ 500)

[Chem. 12]

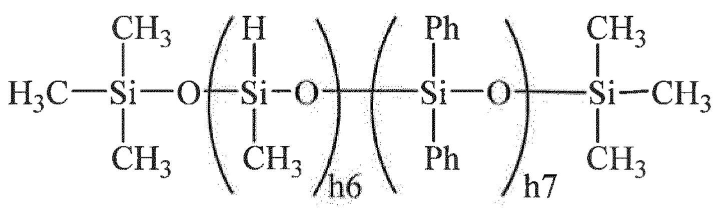

(3 ≤ h6 ≤ 100, 0 ≤ h7 ≤ 500)

[Chem. 13]

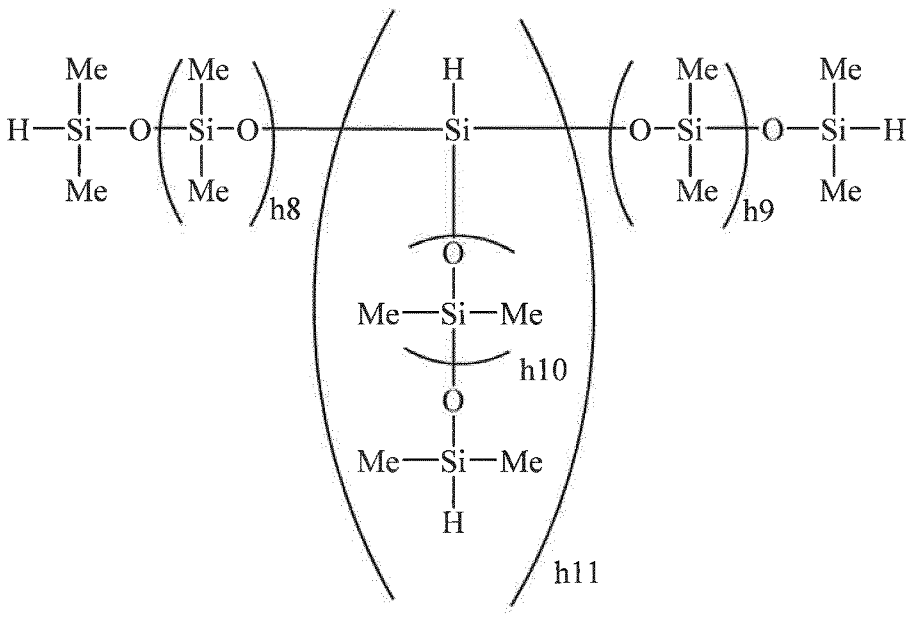

(0 ≤h8 ≤ 200, 0 ≤ h9 ≤ 200, 0 ≤ h10 ≤ 100, 1 ≤ h11 ≤ 100)

Component (B) is blended in such an amount that the moles of SiH groups is 0.5 to 70 times the moles of alkenyl groups in component (A). If this molar ratio is less than 0.5, curability may be low and adhesion to the substrate may be poor. If this molar ratio is more than 70, the pot life may be short. Preferably component (B) is blended in such an amount that the moles of SiH groups is 3 to 60 times, more preferably 5 to 60 times the moles of alkenyl groups in component (A).

Component (C)

Component (C) is a platinum group metal catalyst or addition reaction catalyst which is used to promote crosslinking reaction between components (A) and (B) to form a cured film. Examples of the addition reaction catalyst include platinum black, chloroplatinic acid, complexes of chloroplatinic acid with olefins or vinylsiloxanes, chloroplatinic acid-alcohol coordination compounds, rhodium, and rhodium-olefin complexes. These compounds may be used alone or in combination of two or more.

The addition reaction catalyst is used in a catalytic amount, preferably 5 to 2,000 ppm (weight basis) of platinum or rhodium based on the total weight of components (A) and (B). The amount may be properly adjusted in accordance with the reactivity of the components and the desired cure rate.

Component (D)

Component (D) is an organic solvent which is blended for the purposes of improving the stability of treating solution, facilitating coating to various substrates, and adjusting the coating weight and viscosity, if necessary. Especially the solvent imparts the desired effect to the silicone composition for release film. Those organic solvents in which the composition is uniformly dissolved are useful, for example, toluene, xylene, ethyl acetate, acetone, methyl ethyl ketone, and hexane. Preferably toluene, methyl ethyl ketone, and hexane are used. The solvents may be used alone or in combination of two or more.

Since component (D) is optional, its amount may be 0 part by weight. The organic solvent is not blended when the danger of the organic solvent or a lowering of safety is undesired, and in this case, the silicone composition for release paper or film may be used as solventless type. When component (D) is blended, its amount is preferably 10 to 100,000 parts by weight, more preferably 10 to 10,000 parts by weight per 100 parts by weight of component (A). Too much amounts may cause inefficient coating whereas too less amounts may lead to a short pot-life.

Component (E)

The inventive composition contains (E) an ionic compound as an antistatic agent. The ionic compound is ion-dissociable at room temperature. Component (E) can impart excellent antistatic properties when combined with component (F). Suitable ionic compounds include alkali metal salts and ionic liquids and may be used alone or in combination of two or more.

Examples of the alkali metal salt include, but are not limited to, metal salts composed of cations such as lithium ion, sodium ion and potassium ion, with anions such as chloride ion, bromide ion, iodide ion, tetrachloroaluminum ion, hexafluorophosphate ion, tetrafluoroborate ion, thiocyanate ion, perchlorate ion, p-toluenesulfonate ion, trifluoromethanesulfonate ion, pentafluoroethanesulfonate ion, bis(trifluoromethanesulfonyl)imide, dicyanamide, tris(trifluoromethylsulfonyl)methide, acetate ion, trifluoroacetate ion, and hexafluoroantimony ion. More preferred are lithium salts such as lithium bromide, lithium iodide, lithium tetrafluoroborate, lithium hexafluorophosphate, lithium thiocyanate, lithium perchlorate, lithium trifluoromethanesulfonate, and lithium bis(trifluoromethanesulfonyl)imide. These alkali metal salts may be used alone or in combination of two or more.

The ionic liquid refers to a molten salt which is liquid and nonvolatile at a temperature in the range of 0 to 150°C. Since the ionic liquid is liquid at any temperature in the range, it is easier to add to, disperse in or dissolve in the release agent than a solid salt.

The ionic liquid is preferably selected from nitrogen-containing onium salts, sulfur-containing onium salts, and phosphorus-containing onium salts, more preferably from nitrogen-containing onium salts. Each onium salt is composed of an anion moiety and a cation moiety, which are described below.

Suitable anion moieties include, but are not limited to, chloride ion, bromide ion, iodide ion, hexafluorophosphate ion, tetrafluoroborate ion, p-toluenesulfonate ion, trifluoromethanesulfonate ion, pentafluoroethanesulfonate ion, N-methyltrifluoromethanesulfonamide, bis(trifluoromethanesulfonyl)imide, dicyanamide, tris(trifluoromethylsulfonyl)methide, acetate ion, trifluoroacetate ion, as well as conjugated bases of superstrong acids such as tetrafluoroborate ion, hexafluorophosphate ion, chlorofluoroborate ion, hexafluoroantimonate ion, hexafluoroarsenate ion, taurine hexafluoride ion and antimony hexafluoride ion as described in JP-A 2016-027128.

Suitable cation moieties include, but are not limited to, 1-butyl-3-methylimidazolium, 1-ethyl-3-methylimidazolium, 1-hexyl-3-methylimidazolium, 1-butyl-2,3-dimethylimidazolium, 1-methyl-3-(3-cyanopropyl)imidazolium, 1-methoxyethyl-3-methylimidazolium, N-hexylpyridinium, 1-butyl-1-methylpyrrolidinium, 1-butyl-1-methylpiperidinium, tetrabutylphosphonium, trihexyl(tetradecyl)phosphonium, trimethylsulfonium, trimethylammonium, diisopropylethylammonium, as well as quaternary ammonium salts such as trimethyldodecylammonium, trimethyltetradecylammonium, trimethylhexadecylammonium, trimethyloctadecylammonium, trimethyl coconut oil alkylammonium, trimethyl-2-ethylhexylammonium, dimethylethyldodecylammonium, dimethylethyltetradecylammonium, dimethylethylhexadecylammonium, dimethylethyloctadecylammonium, dimethylethyl coconut oil alkylammonium, dimethylethyl-2-ethylhexylammonium, methyldiethyldodecylammonium, methyldiethyltetradecylammonium, methyldiethylhexadecylammonium, methyldiethyloctadecylammonium, methyl diethyl coconut oil alkylammonium, methyldiethyl-2-ethylhexylammonium, dimethyldihexylammonium, dimethyldioctylammonium, dimethyldidecylammonium, dimethyldidodecylammonium, trimethyloleylammonium, dimethylethyloleylammonium, methyldiethyloleylammonium, dimethyldecylbenzylammonium, dimethyldodecylbenzylammonium, dimethyltetradecylbenzylammonium, dimethylhexadecylbenzylammonium, dimethyl coconut oil alkylbenzylammonium, dimethyloleylbenzylammonium, dimethyl-2-ethylhexylbenzylammonium, oleamidoethyldiethylmethylammonium, stearamidoethyldiethylbenzylammonium, stearamidopropyldimethylhydroxyethylammonium, stearyloxymethylpyridinium, hexadecyloxymethylpyridium, and hexadecyloxymethylpyridinium as described in JP-A 2016-027128.

Preferred are trimethylammonium, diisopropylethylammonium, trimethylhexadecylammonium, dimethyldidecylammonium, dimethyldodecylbenzylammonium, and dimethyltetradecylbenzylammonium.

More specifically, suitable ionic liquids include, but are not limited to, trimethylammonium bis(trifluoromethanesulfonyl)imide, diisopropylethylammonium bis(trifluoromethanesulfonyl)imide, 1-butyl-3-methylimidazolium bis(trifluoromethanesulfonyl)imide, 1-ethyl-3-methylimidazolium bis(trifluoromethanesulfonyl)imide, 1-butyl-2,3-dimethylimidazolium bis(trifluoromethanesulfonyl)imide, 1-methyl-3-(3-cyanopropyl)imidazolium bis(trifluoromethanesulfonyl)imide, 1-methoxyethyl-3-methylimidazolium bis(trifluoromethanesulfonyl)imide, 1-butyl-1-methylpyrrolidinium bis(trifluoromethanesulfonyl)imide, 1-butyl-1-methylpyrrolidinium dicyanamide, dimethyldidecylammonium tetrafluoroborate, didecyldimethylammonium trifluoromethanesulfonate, trimethylhexadecylammonium tetrafluoroborate, dimethyl coconut oil alkylbenzylammonium tetrafluoroborate, dimethyl coconut oil alkylbenzylammonium trifluoromethanesulfonate, and the ionic liquids described in JP-A 2016-027128. Preferred are trimethylammonium bis(trifluoromethanesulfonyl)imide, diisopropylethylammonium bis(trifluoromethanesulfonyl)imide, dimethyldidecylammonium tetrafluoroborate, didecyldimethylammonium trifluoromethanesulfonate, trimethylhexadecylammonium tetrafluoroborate, dimethyl coconut oil alkylbenzylammonium tetrafluoroborate, and dimethyl coconut oil alkylbenzylammonium trifluoromethanesulfonate. The ionic liquids may be used alone or in combination of two or more.

Component (E) is preferably blended in an amount of 0.1 to 10 parts by weight, more preferably 0.2 to 9 parts by weight per 100 parts by weight of component (A) from the standpoint of obtaining excellent antistatic properties. If the amount is less than 0.1 part by weight, antistatic properties may be insufficient. If the amount exceeds 10 parts by weight, cure may be insufficient.

Component (F)

Component (F) is a compound selected from the following (F-1), (F-2) and (F-3):

(F-1) a compound having (f1) and (f3),
(F-2) a compound having (f2) and (f3), and
(F-3) a compound having (f1), (f2) and (f3),

wherein (f1) is a hydrosilylation reactive group, (f2) is a polysiloxane structure, and (f3) is a polyoxyethylene chain. Each of (f1) to (f3) may be a combination of two or more.
The hydrosilylation reactive group is a reactive functional group capable of participating in addition reaction between carbon-carbon double bonds and silicon-bonded hydrogen atoms in the presence of a hydrosilylation reaction catalyst such as a platinum group metal catalyst. Examples include organic groups having a carbon-carbon double bond at least in part, such as alkenyl groups of 2 to 20 carbon atoms, acrylic or methacrylic groups, and Si-H groups.

(F-1): compound having (f1) organic group having a carbon-carbon double bond at least in part and (f3)

Examples include, but are not limited to, polyethylene glycol monoallyl ether, methoxypolyethylene glycol monoallyl ether, phenoxypolyethylene glycol monoallyl ether, polyethylene glycol diallyl ether, ethylene glycol monoallyl ether, ethylene glycol diallyl ether, polyethylene glycol monoacrylate, methoxypolyethylene glycol monoacrylate, phenoxypolyethylene glycol monoacrylate, polyethylene glycol diacrylate, ethylene glycol monomethacrylate, ethylene glycol dimethacrylate, and polyethylene glycol mono(2-propynyl) ether.

(F-1): compound having (f1) Si-H group and (f3)

Examples include, but are not limited to, etherified products of polyethylene glycol monoallyl ether and chlorodimethylsilane, etherified products of polyethylene glycol and chlorodimethylsilane, etherified products of trimethylol propane diallyl ether and chlorodimethylsilane, etherified products of EO adducts of pentaerythritol triallyl ether and chlorodimethylsilane, EO adducts of glycerol monoallyl ether, and etherified products of EO adducts of allyl amine and chlorodimethylsilane, as described in JP-A 2016-027128.

(F-2): compound having (f2) and (f3)

Examples include, but are not limited to, urethane urea products obtained by reacting amino-modified silicone with polyethylene glycol (abbreviated as PEG, hereinafter) using polyisocyanate, esterified products obtained by reacting epoxy-modified silicone with PEG using dicarboxylic acid, urethane products obtained by reacting carbinol-modified silicone with PEG using polyisocyanate, polyether-modified silicone, thiourethane products obtained by reacting mercapto-modified silicone with PEG using polyisocyanate, esterified product of carboxyl-modified silicone or carboxylic anhydride-modified silicone with PEG, compounds obtained from addition reaction of methylhydrogensilicone and PEG having an ethylenically unsaturated bond at an end or side chain, and PEG-modified silicone, as described in JP-A 2016-027128.

(F-3): compound having (f1), (f2) and (f3)

Examples include, but are not limited to, urethane urea products obtained from reaction of (f1) with (F-2) using polyisocyanate, etherified products of allyl chloride and (F-2), and etherified products of chlorodimethylsilane and (F-2), as described in JP-A 2016-027128.
According to the invention, excellent antistatic effect is exerted by the combined use of components (E) and (F) for the following reason. Since component (F) has (f1) hydrosilylation reactive group, it can react with component (A) or (B) and be incorporated in a silicone film. Also, component (F) having (f2) polysiloxane structure is well compatible with the cured film and readily dispersed in the film. If a compound is free of (f1) and/or (f2), it is less compatible with the cured film so that it may be locally distributed at the interface between the substrate and the cured film or the surface of the cured film, leading to a reduction of adhesion.
When the ionic compound (E) is blended alone, the ionic compound tends to agglomerate together because it is less compatible with the cured film of silicone. It is also believed that the ionic compound is locally distributed at the substrate-film interface or the film surface. Then, the antistatic effect is not exerted, and there occur degradation of adhesion to the substrate and bleed-out from the cured film. According to the invention, (F) compound having polyoxyethylene chain is dispersed in the cured film, which helps the ionic compound to disperse, achieving good adhesion to

the substrate, suppression of bleed-out, and excellent antistatic effect.

Component (F) is preferably blended in an amount of 1 to 30 parts by weight, more preferably 3 to 25 parts by weight per 100 parts by weight of component (A). Within the range, excellent antistatic properties are developed without compromising adhesion to the substrate.

While the inventive silicone composition is obtained by blending predetermined amounts of components (A) to (F) defined above, other optional components may be added if desired and insofar as the objects and benefits of the invention are not impaired. Any well-known additives commonly used in silicone-base release compositions may be added in standard amounts. The other optional components which can be blended include (G) migratory component, (H) release force adjusting agent, and (I) pot-life extender, as well as well-known antioxidants, pigments, stabilizers, defoamers, adhesion improvers, tackifiers, and inorganic fillers such as silica insofar as the benefits of the invention are not impaired.

Component (G)

Component (G) is a migratory component which imparts slippage and migration to the cured film. When component (G) is added, the amount of antistatic agent available near a surface layer of the cured film is increased, with antistatic properties being improved. This is effective for preventing breakage or degradation of the cured film during the manufacture or conversion of release paper or film and also useful for lightening the release force of the cured film. Examples of (G) migratory component include organopolysiloxane containing or not containing a small amount of alkenyl group (e.g. up to 0.003 mole of alkenyl group per 100 g of the organopolysiloxane), and acrylic silicone graft copolymers, which may be used alone or in combination of two or more.

The organopolysiloxane used herein preferably has the general formula (3):

$$R^3_{3-i}R^4_i\text{-SiO-}(Me_2SiO)_j(R^5MeSiO)_k(R^6_2SiO)_l\text{-}SiR^3_{3-i}R^4_i \qquad (3)$$

wherein $R^3$ is independently a monovalent organic group free of aliphatic unsaturation, $R^4$ is independently an alkyl, hydroxyl, alkoxy or alkenyl group, $R^5$ and $R^6$ are each independently a monovalent organic group free of aliphatic unsaturation, i is independently an integer of 1 to 3, j, k and 1 are selected from positive numbers such that the organopolysiloxane may have a viscosity at 25°C of up to 100 Pa·s as expressed by a 30 wt% toluene dilution viscosity.

A main skeleton composed mainly of dimethylsiloxane units and having no functional group on side chain is adequate for the purpose. Also, the elimination of a functional group at an end is effective for slippage, but the possession thereof is effective for increasing residual adhesion. Suitable functional groups are hydroxyl groups capable of reacting with SiH groups in component (B) and alkoxy groups which are hydrolysable to be reactive, as well as alkenyl groups.

Examples of the organopolysiloxane include those having the general formula (4), but are not limited thereto. In the formulae, Me and Ph stand for methyl and phenyl, respectively.

[Chem. 14]

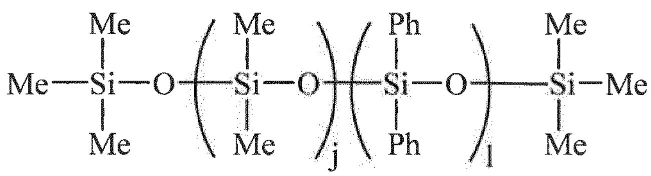

(4)

$(10 \leq j \leq 20{,}000,\ 0 \leq l \leq 500)$

The acrylic silicone graft copolymer used herein is a copolymer of an organopolysiloxane compound (Ga) having acrylic and/or methacrylic group (referred to as (meth)acrylic group, hereinafter) and a radical polymerizable monomer (Gb) having one radical polymerizable group per molecule. Its weight average molecular weight is preferably 1,000 to 100,000.

The weight average molecular weight (Mw) of the copolymer is 1,000 to 100,000, more preferably 1,500 to 50,000, even more preferably 2,000 to 30,000, as measured by gel permeation chromatography (GPC) using toluene as developing solvent versus polystyrene standards. A Mw of less than 1,000 leads to a reduction of percent residual adhesion whereas a copolymer with a Mw in excess of 100,000 is less dispersible in the silicone composition.

*Component (Ga): organopolysiloxane compound having (meth)acrylic group*

The organopolysiloxane compound (Ga) used herein is not particularly limited as long as it has a (meth)acrylic group. A radical polymerizable silicone macromonomer having the general formula (5) is preferred from the standpoints of ease of copolymerization with a radical polymerizable monomer (Gb) having one radical polymerizable group per molecule, ease of synthesis of the organopolysiloxane compound itself, and the effect of a release force-controlling component.

[Chem. 15]

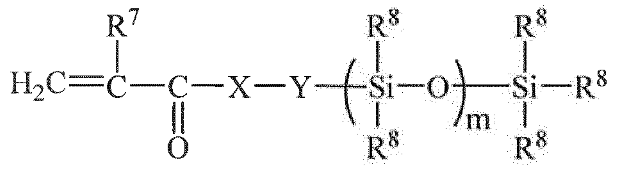
(5)

In formula (5), $R^7$ is hydrogen or methyl. X is a divalent functional group selected from oxygen atom, NH group and sulfur atom. Y is a divalent hydrocarbon group of 1 to 12 carbon atoms, preferably 1 to 10 carbon atoms, which may have an intervening oxygen atom. Examples include alkylene groups such as methylene, ethylene, propylene (trimethylene, methylethylene), butylene (tetramethylene, methylpropylene), hexamethylene, and octamethylene, arylene groups such as phenylene, combinations of two or more of the foregoing (e.g. alkylene-arylene groups), $-CH_2CH_2-O-CH_2CH_2-$, $-CH_2CH_2-O-CH_2CH_2-O-CH_2CH_2-$, $-CH(CH_3)CH_2-O-CH(CH_3)CH_2-$, and $-CH_2CH_2CH_2CH_2-O-CH_2CH_2CH_2CH_2-$. Preferably Y is ethylene, propylene or butylene. The subscript m is an integer of 0 to 1,000, preferably 0 to 500, more preferably 0 to 200.

$R^8$ which may be the same or different is a substituted or unsubstituted monovalent hydrocarbon group of 1 to 20 carbon atoms, preferably 1 to 18 carbon atoms, hydrogen, hydroxyl, alkoxy group of 1 to 10 carbon atoms, preferably 1 to 8 carbon atoms, or a substituent group having the general formula (6).

[Chem. 16]

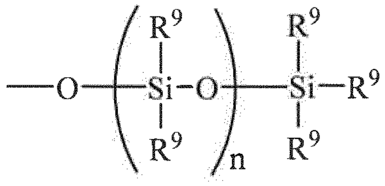
(6)

Herein $R^9$ which may be the same or different is a substituted or unsubstituted monovalent hydrocarbon group of 1 to 20 carbon atoms, preferably 1 to 18 carbon atoms, hydrogen, hydroxyl, or alkoxy group of 1 to 10 carbon atoms, preferably 1 to 8 carbon atoms, and n is an integer of 0 to 300.

Examples of the substituted or unsubstituted monovalent hydrocarbon groups represented by $R^8$ and $R^9$ include alkyl groups such as methyl, ethyl, propyl and butyl, cycloalkyl groups such as cyclohexyl, aryl groups such as phenyl and tolyl, aralkyl groups such as benzyl and phenethyl, and substituted forms of the foregoing in which one or more or even all carbon-bonded hydrogen atoms are substituted by hydroxyl, cyano, halogen or the like, such as hydroxypropyl, cyanoethyl, 3-chloropropyl and 3,3,3-trifluoropropyl. Examples of the alkoxy group of 1 to 10 carbon atoms include methoxy, ethoxy, propoxy and butoxy. $R^8$ is preferably an alkyl or aryl group, more preferably an alkyl group of 1 to 5 carbon atoms. $R^9$ is preferably an alkyl or aryl group, more preferably an alkyl group of 1 to 5 carbon atoms. The subscript n is an integer of 0 to 300, preferably 0 to 100, more preferably 0 to 50.

Examples of component (Ga) are given below, but not limited thereto. In the formulae, Me, OMe, and Ph stand for methyl, methoxy, and phenyl, respectively.

[Chem. 17]

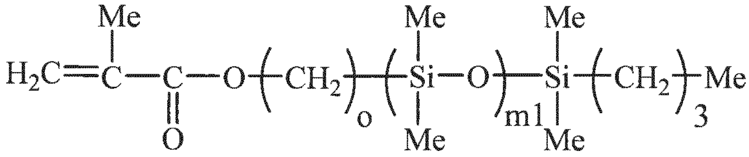

($1 \leq o \leq 12$, $0 \leq m1 \leq 1{,}000$)

[Chem. 18]

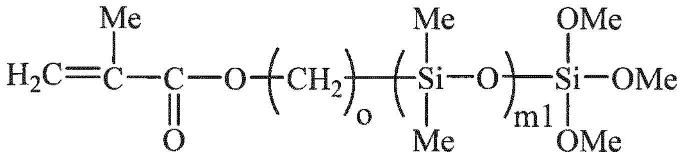

($1 \leq o \leq 12$, $0 \leq m1 \leq 1{,}000$)

[Chem. 19]

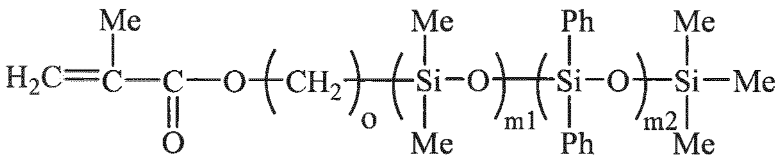

($1 \leq o \leq 12$, $0 \leq m1 \leq 1{,}000$, $0 \leq m2 \leq 1{,}000$, $0 \leq m1+m2 \leq 1{,}000$)

[Chem. 20]

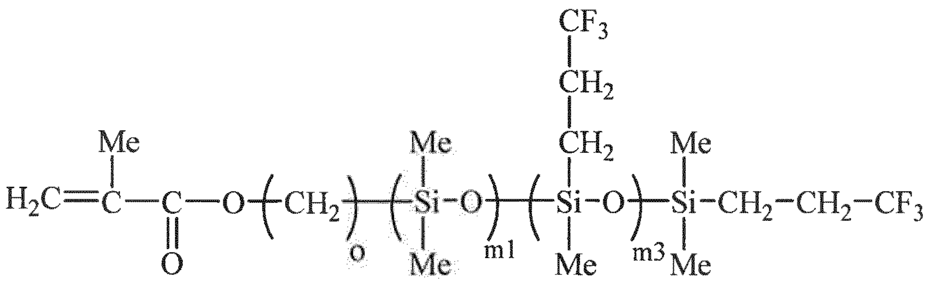

($1 \leq o \leq 12$, $0 \leq m1 \leq 1{,}000$, $0 \leq m3 \leq 1{,}000$, $0 \leq m1+m3 \leq 1{,}000$)

[Chem. 21]

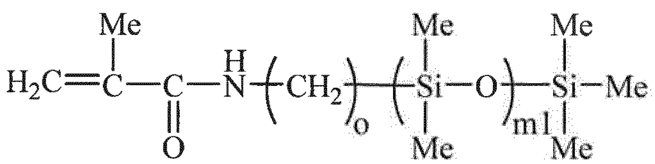

($1 \leq o \leq 12$, $0 \leq m1 \leq 1{,}000$)

[Chem. 22]

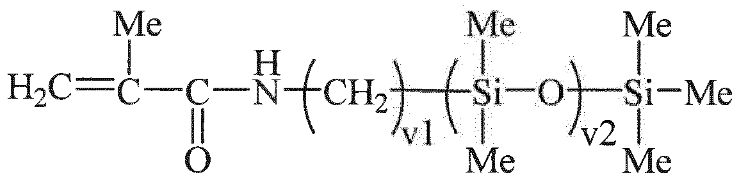

(1 ≤ o ≤ 12, 0 ≤ m1 ≤ 1,000)

[Chem. 23]

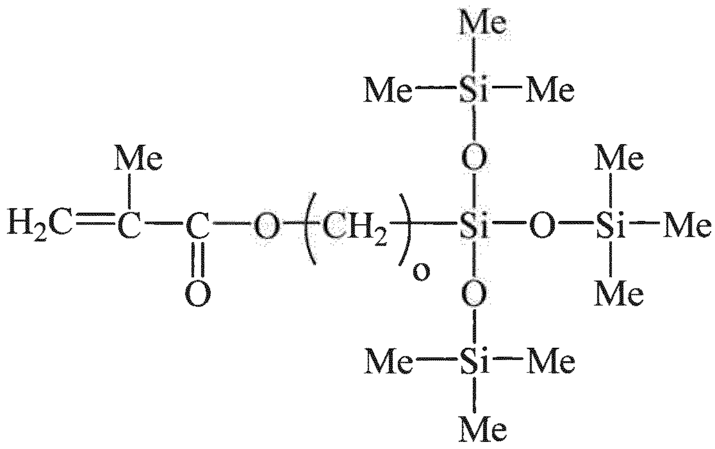

(1 ≤ o ≤ 12)

[Chem. 24]

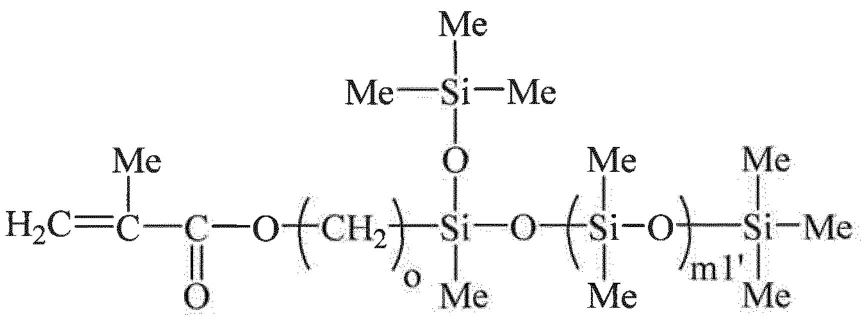

(1 ≤ o ≤ 12, 0 ≤ m1' ≤ 999)

[Chem. 25]

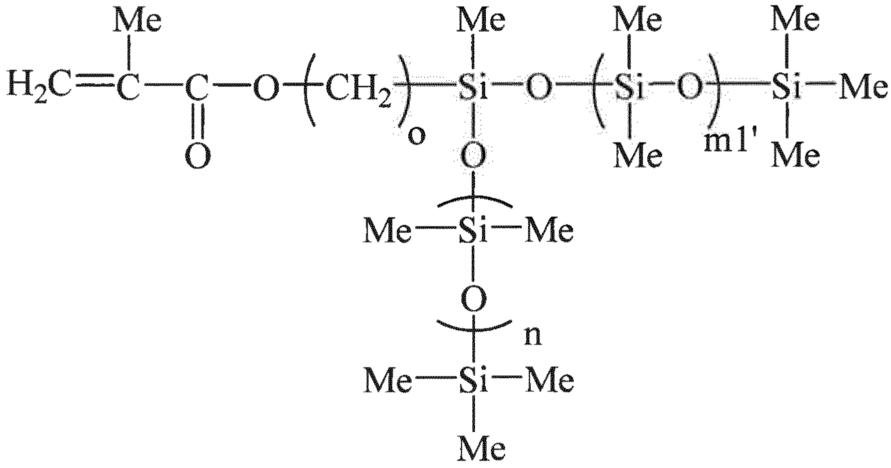

($1 \leq o \leq 12$, $0 \leq m1' \leq 999$, $0 \leq n \leq 300$)

*Component (Gb): radical polymerizable monomer*

The radical polymerizable monomer (Gb) may be used herein alone or in admixture. It is not particularly limited as long as it has one radical polymerizable group per molecule.

Exemplary of component (Gb) are compounds having one radical polymerizable group such as acrylic, methacrylic, styryl, cinnamate, vinyl or allyl per molecule. Examples include esters of (meth)acrylic acid such as methyl (meth)acrylate, ethyl (meth)acrylate, n-butyl (meth)acrylate, 2-ethylhexyl (meth)acrylate, lauryl (meth)acrylate, stearyl (meth)acrylate, cyclohexyl (meth)acrylate, benzyl (meth)acrylate, isobornyl (meth)acrylate, trifluoropropyl (meth)acrylate, perfluorobutylethyl (meth)acrylate, and perfluorooctylethyl (meth)acrylate; epoxy-containing radical polymerizable monomers such as glycidyl (meth)acrylate, β-methylglycidyl (meth)acrylate, and 3,4-epoxycyclohexylmethyl (meth)acrylate; hydroxyl-containing radical polymerizable monomers such as 2-hydroxyethyl (meth)acrylate, 2-hydroxypropyl (meth)acrylate, and 2-hydroxybutyl (meth)acrylate; radical polymerizable silane compounds such as γ-methacryloxypropyltrimethoxysilane, γ-methacryloxypropylmethyldimethoxysilane, γ-methacryloxypropyldimethylmethoxysilane, γ-methacryloxypropyltriethoxysilane, γ-methacryloxypropylmethyldiethoxysilane, γ-methacryloxypropyltributoxysilane, γ-methacryloxypropyltriisopropenoxysilane, γ-acryloxypropyltrimethoxysilane, acryloxymethyltrimethoxysilane, γ-acryloxypropyltriethoxysilane, γ-acryloxypropylmethyldiethoxysilane, styryltrimethoxysilane, styryltriethoxysilane, and α-methylstyryltrimethoxysilane; polyoxyalkylene-containing radical polymerizable monomers; and glycerol (meth)acrylate.

When the release lightening effect and residual adhesion-increasing effect obtained from the release force-controlling component are taken into account, alkyl (meth)acrylates of 1 to 30 carbon atoms are preferred, with methyl (meth)acrylate being most preferred.

*Ratio of component (Ga)/component (Gb)*

The organopolysiloxane compound having (meth)acrylic group (Ga) and the radical polymerizable monomer having one radical polymerizable group per molecule (Gb) are combined in a polymerization weight ratio (Ga)/(Gb) in the range of preferably 30/70 to 99/1, more preferably 40/60 to 97/3, even more preferably 50/50 to 95/5. If the polymerization weight ratio (Ga)/(Gb) is less than 30/70, which means a less content of silicone component, the compatibility of the copolymer in the silicone composition may be low, allowing the release force-controlling component to separate out. If the ratio is more than 99/1, the release lightening effect may be reduced.

Synthesis Of Acrylic-Silicone Graft Copolymer

Monomer materials containing the organopolysiloxane compound having (meth)acrylic group (Ga) and the radical polymerizable monomer having one radical polymerizable group per molecule (Gb) are copolymerized in the presence of a conventional radical polymerization initiator selected from peroxides such as benzoyl peroxide, dicumyl peroxide, lauroyl peroxide, and tert-butyl 2-ethylperoxyhexanoate, and azo compounds such as 2,2'-azobis(2-methylbutyronitrile). Any of solution polymerization, emulsion polymerization, suspension polymerization, and mass polymerization techniques may be applied.

In the practice of the invention, the solution polymerization technique is preferred among these polymerization techniques because the molecular weight of the resulting acrylic silicone graft copolymer can be readily adjusted to an optimum range. Examples of the solvent which can be used for polymerization include aromatic hydrocarbons such as benzene, toluene and xylene, ketones such as acetone, methyl ethyl ketone and methyl isobutyl ketone, esters such as ethyl acetate, n-butyl acetate and isobutyl acetate, alcohols such as ethanol, isopropanol, n-butanol and isobutanol, and mixtures thereof.

The polymerization temperature is preferably in the range of 50 to 180°C, more preferably 60 to 120°C. Under such temperature condition, polymerization reaction may be complete in about 1 to 10 hours. Although the method for taking out the copolymer from the copolymerization solution is not particularly limited, exemplary methods include a method of evaporating the solvent, and a method of adding a poor solvent such as water or methanol to the copolymerization solution, causing the copolymer to precipitate out, and drying.

When used, component (G) is blended in an amount of preferably 0.1 to 20 parts by weight, more preferably 0.1 to 15 parts by weight per 100 parts by weight of component (A). As long as the amount of component (G) blended is in the range, a better release force-controlling effect is obtained.

Component (H)

The release force-adjusting agent (H) is used for the purpose of reducing SiH groups remaining in the treating bath for lightening the release force or increasing the crosslinking density for improving adhesion. A compound containing at least two alkenyl groups per molecule, having an alkenyl content corresponding to 5 to 1000 times the alkenyl content of component (A), and having a viscosity at 25°C of less than 1 Pa·s or a 30 wt% toluene dilution viscosity at 25°C of less than 0.1 Pa·s is used to this end.

When used, component (H) is preferably blended in an amount of 0.1 to 20 parts by weight, more preferably 0.1 to 15 parts by weight per 100 parts by weight of component (A). Using component (H) in the range, the release force may be adjusted as desired.

Examples of the release force-adjusting agent are given below, but not limited thereto. In the formulae, Me, Vi, and Ph stand for methyl, vinyl, and phenyl, respectively.

[Chem. 26]

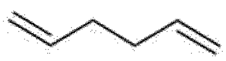

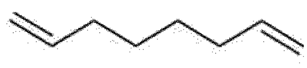

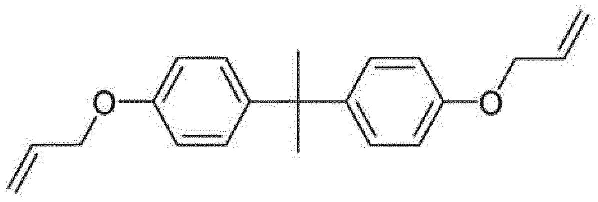

[Chem. 27]

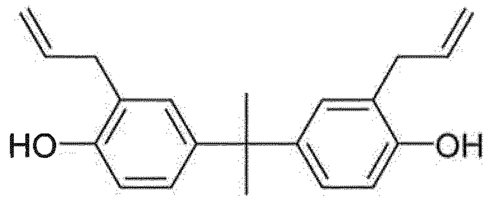

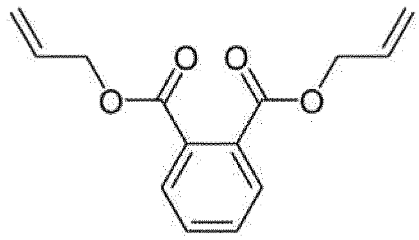

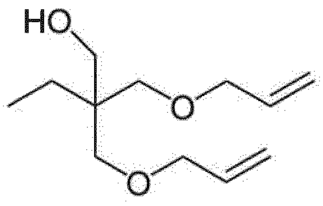

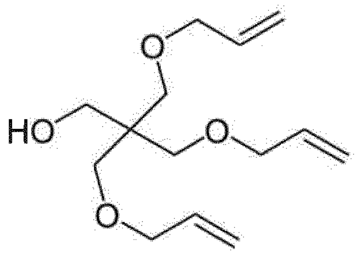

[Chem. 28]

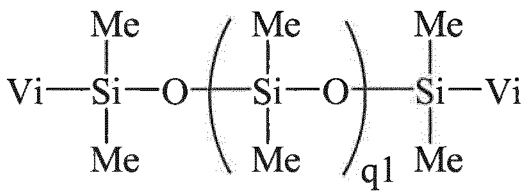

$(0 \leq q1 \leq 500)$

[Chem. 29]

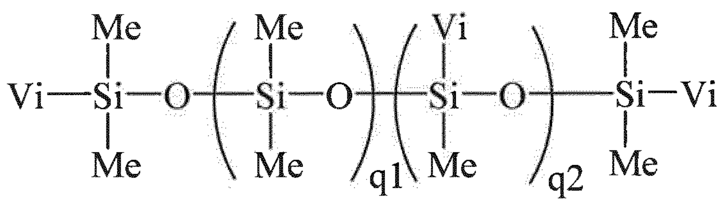

$(0 \leq q1 \leq 500, 1 \leq q2 \leq 500, 1 \leq q1+q2 \leq 500)$

[Chem. 30]

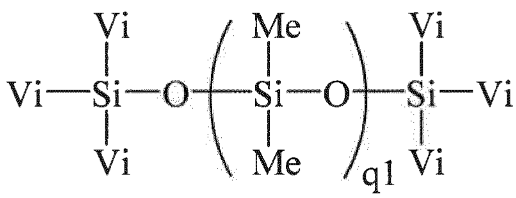

$(0 \leq q1 \leq 500)$

[Chem. 31]

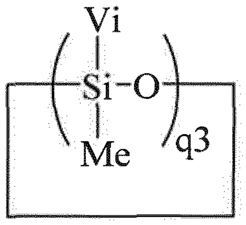

(3 ≤ q3 ≤ 6)

[Chem. 32]

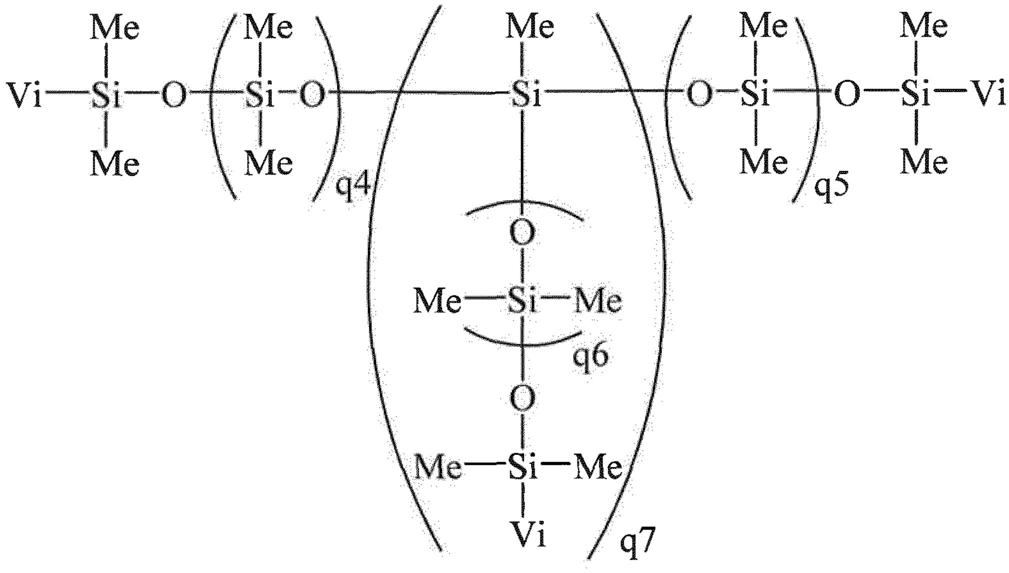

(0 ≤ q4 ≤ 200, 0 ≤ q5 ≤ 200, 0 ≤ q6 ≤ 100, 1 ≤ q7 ≤ 30, 2 ≤ q4+q5+((q6+2)×q7) ≤ 500)

[Chem. 33]

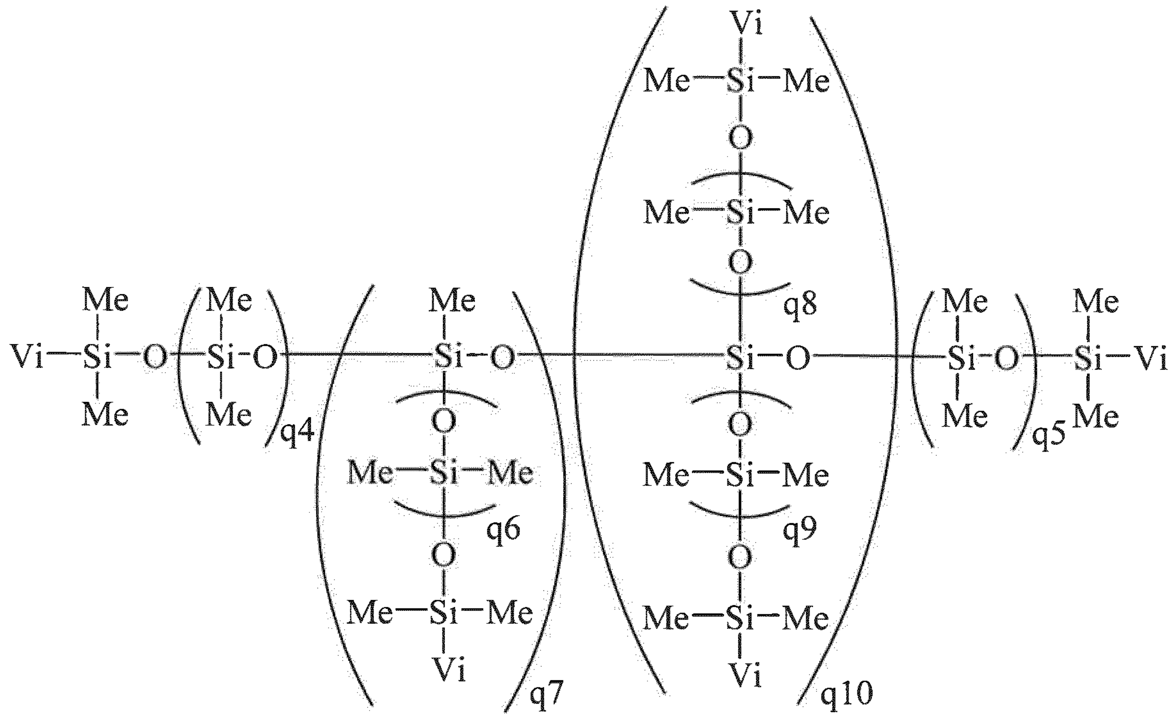

($0 \leq q4 \leq 200$, $0 \leq q5 \leq 200$, $0 \leq q6 \leq 100$, $0 \leq q7 \leq 30$, $0 \leq q8 \leq 100$, $0 \leq q9 \leq 100$, $1 \leq q10 \leq 30$, $3 \leq q4+q5+((q6+2)\times q7)+((q8+q9+3)\times q10) \leq 500$)

Component (I)

The pot-life extender is selected from, for example, organic nitrogen compounds, organic phosphorus compounds, acetylene compounds, oxime compounds, and organic chlorine compounds. Examples include acetylene alcohols such as 3-methyl-1-butyn-3-ol, 3,5-dimethyl-1-hexyn-3-ol, 3-methyl-1-penten-3-ol, phenylbutynol, acetylene compounds such as 3-methyl-3-1-penten-1-yne and 3,5-dimethyl-1-hexyn-3-yne, the reaction products of these acetylene compounds with alkoxysilanes, siloxanes or hydrogensilanes, vinylsiloxanes such as cyclic tetramethylvinylsiloxane, organic nitrogen compounds such as benzotriazole, and other organic phosphorus compounds, oxime compounds, and organic chromium compounds.

The amount of component (I) blended may be sufficient to provide a satisfactory pot-life, and in most cases, preferably 0.01 to 10 parts by weight per 100 parts by weight of component (A).

Preparation method

For the preparation of the silicone composition, a method comprising the steps of previously mixing components (A), (B), (D), (E), (F) and optional components uniformly and adding component (C) immediately before use is preferred in view of pot life.

The silicone composition of the invention is of the addition reaction cure type. The composition or a cured product thereof is a silicone composition having antistatic effect for forming an antistatic release paper or film.

Release liner

A release liner includes a substrate and a release layer formed on the substrate, the release layer being a cured product of the silicone composition. Specifically, a release paper or film includes a paper or film substrate and a release layer in the form of a cured product of the silicone composition formed on the substrate. The release layer may be formed on at least one surface of the substrate, that is, either on one surface or on both surfaces. Using the silicone composition of the invention, an antistatic release liner is obtained.

A cured product of the silicone composition of the invention should preferably have a surface resistivity of up to $5\times10^{12}$ Ω/□, more preferably up to $5\times10^{11}$ Ω/□ as measured under conditions: applied voltage 500 V, temperature 23±3°C, and humidity 45±5%.

Examples of the paper substrate include coated paper sheets such as polyethylene laminated paper, glassine

paper, pure paper, kraft paper, and clay coated paper and synthetic paper sheets such as Yupo. Examples of the film substrate include plastic films such as polyethylene, polypropylene, polystyrene, polyvinyl chloride, polyvinyl alcohol, polyethylene terephthalate (PET), polybutylene terephthalate, polyethylene naphthalate, polyacrylate, polycarbonate, polyvinylidene fluoride, polyarylate, styrene base elastomer, polyester base elastomer, polyether sulfone, polyether imide, polyether ether ketone, polyphenylene sulfide, polyarylate, polyimide, polycarbonate, cellulose triacetate, and cellulose acetate propionate. Among others, PET is preferred from the standpoints of transparency, flexibility, antifouling property and strength.

The thickness of the substrate is selected from the range of 2 to 500 μm. The thickness of the release liner (release paper or film) that is the total thickness of a substrate and a release layer is preferably 2 to 500 μm, more preferably 10 to 100 μm. The thickness of the substrate and the release liner may be measured by a dial gauge, ultrasonic thickness gauge, or well-known thickness gauge. The thickness of the release layer is preferably 0.05 to 5.0 μm, more preferably 0.1 to 2.0 μm. The thickness of the release layer may be measured by an X-ray fluorescence analyzer.

Exemplary of the method for preparing the release liner is a method comprising the steps of coating the silicone composition to at least one surface, for example, one surface or both surfaces of a substrate, drying and curing the silicone composition to form a release layer. A coating technique using a coater such as a bar coater, gravure coater, air knife coater, roll coater, or wire bar is applicable. Although the coating weight is not particularly limited, the coating weight is typically 0.1 to 5.0 g/m$^2$ of solids. One exemplary drying method is by heating the coating to remove volatile and solvent components. For example, a hot air dryer or IR dryer is used. Alternatively, the coating is allowed to stand at room temperature. The drying temperature is preferably 50 to 200°C, more preferably 70 to 180°C. The drying time is preferably 1 to 120 seconds, more preferably 5 to 90 seconds. The silicone composition of the invention is effectively curable, indicating that once the silicone composition is coated and cured, the single coating step is sufficient to impart antistatic and release properties.

The release liner of the invention has improved antistatic and release properties. Therefore, it is preferably used as a pressure-sensitive adhesive (PSA) sheet for optical and electronic/electric parts. The use of the antistatic release liner as a PSA sheet encompasses bonding of the release liner to an optical or electronic/electric part.

## EXAMPLES

Synthesis Examples, Examples and Comparative Examples are given below for further illustrating the invention, but the invention is not limited to the Examples. In the Examples, parts are by weight (pbw).

## PREPARATION OF SILICONE COMPOSITION AND RELEASE FILM

### RAW MATERIALS

### Component (A)

(A-1)

an organopolysiloxane consisting of 0.02 mol% of dimethylvinylsiloxane units: $(CH_3)_2(CH_2{=}CH)SiO_{1/2}$, 0.48 mol% of methylvinylsiloxane units: $(CH_3)(CH_2{=}CH)SiO_{2/2}$, 97.7 mol% of dimethylsiloxane units: $(CH_3)_2SiO_{2/2}$, and 1.80 mol% of diphenylsiloxane units: $(Ph)_2SiO_{2/2}$
viscosity in 30 wt% toluene solution at 25°C = 15 Pa·s
alkenyl content = 0.0065 mol/100 g

(A-2)

an organopolysiloxane consisting of 0.02 mol% of dimethylvinylsiloxane units: $(CH_3)_2(CH_2{=}CH)SiO_{1/2}$, 2.98 mol% of methylvinylsiloxane units: $(CH_3)(CH_2{=}CH)SiO_{2/2}$, and 97.00 mol% of dimethylsiloxane units: $(CH_3)_2SiO_{2/2}$
viscosity in 30 wt% toluene solution at 25°C = 10 Pa·s
alkenyl content = 0.040 mol/100 g

### Component (B)

(B-1)

an organohydrogenpolysiloxane consisting of 2 mol% of trimethylsiloxane units: $(CH3)_3SiO_{1/2}$, 58 mol% of methylhydrogensiloxane units: $(CH_3)HSiO_{2/2}$, 20 mol% of dimethylsiloxane units: $(CH_3)_2SiO_{2/2}$, and 20 mol% of diphenylsiloxane units: $(Ph)_2SiO_{2/2}$
viscosity at 25°C = 0.7 Pa·s
SiH content = 0.64 mol/100 g

(B-2)

an organohydrogenpolysiloxane consisting of 5 mol% of trimethylsiloxane units: $(CH_3)_3SiO_{1/2}$ and 95 mol% of methylhydrogensiloxane units: $(CH_3)HSiO_{2/2}$
viscosity at 25°C = 0.02 Pa·s
SiH content = 1.6 mol/100 g

Component (C)

platinum-vinylsiloxane complex as catalyst

Component (D)

solvent mixture of toluene and hexane in weight ratio 1:1

Component (E)

(E-1) dimethyldi-n-decylammonium tetrafluoroborate
(E-2) diisopropylethylammonium bis(trifluoromethanesulfonyl)imide
(E-3) lithium bis(trifluoromethanesulfonyl)imide

(F1-1) Uniox PKA-5001 (polyethylene glycol monoallyl ether, average molecular weight 200, by NOF Corp.)
(F1-2) Uniox AA-480R (polyethylene glycol diallyl ether, average molecular weight 500, by NOF Corp.)
(F2) KF-6017 (polyether-modified silicone, by Shin-Etsu Chemical Co., Ltd.)

Preparation Example of (F3)

A glass reactor equipped with a stirrer, thermometer, reflux condenser and dropping funnel was charged with 11.2 parts (2 mol) of allyl alcohol ethylene oxide adduct, 41 parts (1 mol) of carboxyl-modified silicone oil (X-22-162C by Shin-Etsu Chemical Co., Ltd.), and 0.3 part of esterifying catalyst (p-toluenesulfonic acid monohydrate by Nacalai Tesque Inc.) all at once. The contents were heated for reaction at 180±5°C in a nitrogen stream for 24 hours while distilling off the water formed, yielding an allyl-containing PEG-modified silicone (F3).

(F') PEG #600
(polyethylene glycol, average molecular weight 600, by NOF Corp.) for comparison
(G-1) an organopolysiloxane consisting of 0.03 mol% of dimethylvinylsiloxane units: $(CH_3)_3SiO_{1/2}$ and 99.7 mol% of dimethylsiloxane units: $(CH_3)_2SiO_{2/2}$ (viscosity in 30 wt% toluene solution at 25°C = 10 Pa·s)

Preparation Example of (G-2)

A glass reactor equipped with a stirrer, thermometer, reflux condenser and dropping funnel was charged with 33.0 parts of toluene and heated at 90-100°C. In a nitrogen stream, a mixture of 55.7 parts (0.067 mol) of a radical polymerizable silicone macromonomer having the formula (7) below, 9.8 parts (0.098 mol) of methyl methacrylate, 2.5 parts (0.012 mol) of tert-butyl 2-ethylperoxyhexanoate, and 51.8 parts of toluene was added dropwise to the reactor over 4 hours. Polymerization was performed at 90-100°C for 2 hours. Thereafter, 0.4 part (0.002 mol) of tert-butyl 2-ethylperoxyhexanoate was added, followed by 2 hours of polymerization. On drying in a vacuum dryer under conditions:

150°C and 10 mmHg, there was obtained an acrylic silicone graft copolymer (G-2), which had a Mw of 12,000 by GPC versus polystyrene standards.

[Chem. 34]

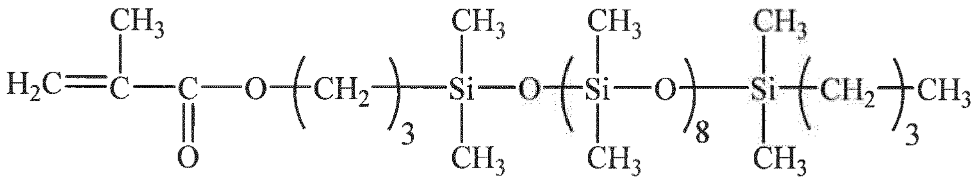

(7)

Component (H)

3 -methyl-1 -butyn-3 -ol

EXAMPLES 1 TO 12 & COMPARATIVE EXAMPLES 1 TO 7

Using the foregoing components (A) to (H) as raw materials, coating compositions were prepared according to the following procedure.

Components (A), (B), (E), (F) and optionally (G) were fed into a flask in accordance with the formulation ratio shown in the Tables, and 3,200 parts of (D) and 5 parts of (H) were added thereto, which were stirred until dissolution. Component (C) was added to the solution in accordance with the formulation ratio, which was stirred and mixed, obtaining a coating composition. A coated article was prepared from the composition and tested by the following methods.

TESTS

The release agent of each Example was evaluated or measured for curability, the force required to peel (referred to as "release strength" hereinafter), residual adhesion, and surface resistivity by the following methods. The results are shown in Table 1.

Curability (adhesion immediately after curing)

The composition was coated onto a PET film 38 μm thick at a coating weight of 0.3 $g/m^2$ as solids by means of a bar coater and heated in a hot-air dryer at 120°C for 1 minute to form a release layer. The release layer was rubbed with a finger for 10 strokes, after which it was visually observed for smear and rub-off and evaluated according to the following criterion.

A: no smear or rub-off observed
B: some smear and rub-off observed
C: smear and rub-off observed

Release strength

A release layer was formed as in the above cure test. Evaluation was made by the following procedure according to the FINAT test method.

A PSA tape 25 mm wide (Tesa 7475 tape by Tesa Tape Inc.) was rested on the surface of the release agent layer. With a load of 70 $g/cm^2$ resting on the PSA tape, the assembly was heat treated in a dryer at 25°C for 20 hours. The assembly was cooled in air for 30 minutes. Using a tensile tester (DSC-500 model tester by Shimadzu Corp.), a release force (N/25 mm) was measured by peeling the Tesa 7475 tape from the release layer at an angle of 180° and a peel rate of 0.3 m/min.

Residual adhesion (%)

A release layer was formed as in the above cure test. A polyester PSA tape (Nitto 31B by Nitto Denko Corp.) was rested on the surface of the release layer. With a load of 1,976 $Pa/cm^2$ resting on the PSA tape, the PSA tape was bonded to the release agent layer. After further heat treatment at 70°C for 20 hours, the polyester PSA tape was peeled

from the release agent layer and in turn, attached to a stainless steel plate. Next, using a tensile tester, a release strength X required to peel the polyester PSA tape from the steel plate was measured.

Also, a polyester PSA tape which had not been bonded to the release agent layer was attached to a stainless steel plate. Using a tensile tester, a release strength Y required to peel the polyester PSA tape from the steel plate was measured.

A percent residual adhesion was computed from the formula:

$$(\text{release strength X/ release strength Y}) \times 100(\%).$$

The higher the residual adhesion, the better is the release of the release agent layer. A reduction of the adhesive force of polyester PSA tape as a result of bonding to the release agent layer is suppressed. That is, bleed-out from the layer is prevented.

Surface resistivity

Using Hiresta MCP-HT450 by Mitsubishi Chemical Co., Ltd., surface resistivity was measured under conditions: probe type UR-100, applied voltage 500 V, temperature 23±3°C, and humidity 45±5%. In the Tables, "Ω/□" means ohm per square.

Table 1

| Composition (pbw) | Example | | | | | |
|---|---|---|---|---|---|---|
| | 1 | 2 | 3 | 4 | 5 | 6 |
| (A-1) | 100 | 100 | | 100 | 100 | |
| (A-2) | | | 100 | | | 100 |
| (B-1) | 8 | 16 | | 8 | 16 | |
| (B-2) | | | 10 | | | 10 |
| (C) | 0.08 | 0.08 | 0.08 | 0.08 | 0.08 | 0.08 |
| (D) | 3,200 | 3,200 | 3,200 | 3,200 | 3,200 | 3,200 |
| (E-1) | 1 | | | 1 | | 3 |
| (E-2) | | 1 | | | 6 | 3 |
| (E-3) | | | 1 | | | |
| (F1-1) | 15 | | | | 15 | |
| (F1-2) | | 15 | | | | 15 |
| (F2) | | | 15 | | | |
| (F-3) | | | | 15 | | |
| (H) | 5 | 5 | 5 | 5 | 5 | 5 |
| Hydrogen atoms (mole) | 0.0512 | 0.1024 | 0.1600 | 0.0512 | 0.1024 | 0.1600 |
| Alkenyl groups (mole) | 0.0065 | 0.0065 | 0.0400 | 0.0065 | 0.0065 | 0.0400 |
| Hydrogen/alkenyl | 7.9 | 15.8 | 4.0 | 7.9 | 15.8 | 4.0 |
| Curability (adhesion immediately after curing) | A | A | A | A | A | A |
| Release strength (N/25 mm) | 0.83 | 1.32 | 0.28 | 0.75 | 1.56 | 0.23 |
| Residual adhesion (%) | 98 | 99 | 96 | 99 | 97 | 95 |
| Surface resistivity (Ω/□) | $4\times10^{11}$ | $2\times10^{11}$ | $3\times10^{11}$ | $2\times10^{11}$ | $5\times10^{10}$ | $3\times10^{10}$ |

Table 2

| Composition (pbw) | Example | | | | | |
|---|---|---|---|---|---|---|
| | 7 | 8 | 9 | 10 | 11 | 12 |
| (A-1) | 100 | 100 | 100 | | 100 | 100 |
| (A-2) | | | | 100 | | |
| (B-1) | | | 16 | | 10 | 10 |
| (B-2) | 13 | 24 | | 20 | | |
| (C) | 0.08 | 0.08 | 0.08 | 0.08 | 0.04 | 0.15 |
| (D) | 3,200 | 3,200 | 3,200 | 3,200 | 3,200 | 3,200 |
| (E-1) | 1 | | | 2 | | 1 |
| (E-2) | | 1 | 1 | 2 | 1 | 1 |
| (F1-1) | | | 15 | | | |
| (F1-2) | | | | 15 | | |
| (F2) | 15 | | | | 15 | |
| (F-3) | | 15 | | | | 15 |
| (G-1) | | | 10 | | | |
| (G-2) | | | | 10 | | |
| (H) | 5 | 5 | 5 | 5 | 5 | 5 |
| Hydrogen atoms (mole) | 0.2080 | 0.3840 | 0.1024 | 0.3200 | 0.0640 | 0.0640 |
| Alkenyl groups (mole) | 0.0065 | 0.0065 | 0.0065 | 0.0400 | 0.0065 | 0.0065 |
| Hydrogen/alkenyl | 32.0 | 59.1 | 15.8 | 8.0 | 9.8 | 9.8 |
| Curability (adhesion immediately after curing) | A | A | A | A | A | A |
| Release strength (N/25 mm) | 3.12 | 6.73 | 0.19 | 0.08 | 1.31 | 0.79 |
| Residual adhesion (%) | 100 | 98 | 90 | 92 | 97 | 100 |
| Surface resistivity (Ω/□) | $6\times10^{11}$ | $2\times10^{11}$ | $1\times10^{10}$ | $8\times10^{9}$ | $4\times10^{11}$ | $2\times10^{11}$ |

Table 3

| Composition (pbw) | Comparative Example | | | | | | |
|---|---|---|---|---|---|---|---|
| | 1 | 2 | 3 | 4 | 5 | 6 | 7 |
| (A-1) | 100 | 100 | | 100 | 100 | | 100 |
| (A-2) | | | 100 | | | 100 | |
| (B-1) | 8 | 16 | | 8 | 16 | | 16 |
| (B-2) | | | 10 | | | 10 | |
| (C) | 0.08 | 0.08 | 0.08 | 0.08 | 0.08 | 0.08 | 0.08 |
| (D) | 3,200 | 3,200 | 3,200 | 3,200 | 3,200 | 3,200 | 3,200 |
| (E-1) | 1 | | | | | 5 | |
| (E-2) | | | | | 1 | | 20 |
| (F1-1) | | 15 | | | | | |
| (F1-2) | | | 15 | | | | |
| (F') | | | | 15 | 15 | | |

(continued)

| Composition (pbw) | Comparative Example | | | | | | |
|---|---|---|---|---|---|---|---|
| | 1 | 2 | 3 | 4 | 5 | 6 | 7 |
| (G-2) | | | | | | 10 | |
| (H) | 5 | 5 | 5 | 5 | 5 | 5 | 5 |
| Hydrogen atoms (mole) | 0.0512 | 0.1024 | 0.1600 | 0.0512 | 0.1024 | 0.1600 | 0.1024 |
| Alkenyl groups (mole) | 0.0065 | 0.0065 | 0.0400 | 0.0065 | 0.0065 | 0.0400 | 0.0065 |
| Hydrogen/alkenyl | 7.9 | 15.8 | 4.0 | 7.9 | 15.8 | 4.0 | 15.8 |
| Curability (adhesion immediately after curing) | A | A | A | C | C | C | Uncured |
| Release strength (N/25 mm) | 0.81 | 0.96 | 0.21 | 0.88 | 0.68 | 0.09 | |
| Residual adhesion (%) | 95 | 98 | 96 | 82 | 80 | 81 | |
| Surface resistivity (Ω/□) | >$1\times10^{14}$ | $5\times10^{13}$ | $4\times10^{13}$ | $4\times10^{13}$ | $6\times10^{11}$ | >$1\times10^{1}$ | |

INDUSTRIAL APPLICABILITY

The antistatic release agent and antistatic release films of the invention have excellent antistatic and release properties as well as satisfactory safety and cure behavior and are thus quite useful in the industry.

**Claims**

1. Silicone composition for release paper or release film, comprising

(A) 100 parts by weight of organopolysiloxane containing at least two alkenyl groups per molecule and having an alkenyl content of 0.001 to 0.2 mol/100 g and a 30 wt% toluene dilution viscosity at 25°C of 0.01 to 70 Pa·s,
(B) organohydrogenpolysiloxane containing at least three silicon-bonded hydrogen atoms per molecule, represented by the average compositional formula (1), in such an amount that the moles of silicon-bonded hydrogen atoms is 0.5 to 70 times the moles of alkenyl groups in component (A),

$$R^1_aH_bSiO_{(4-a-b)/2} \qquad (1)$$

wherein $R^1$ which may be the same or different are substituted or unsubstituted monovalent hydrocarbon groups free of aliphatic unsaturation, a is a positive number of 0.1 to 2, b is a positive number of 0.1 to 3, a+b is a positive number of 1 to 3, a and b are selected such that the organohydrogenpolysiloxane contains at least three SiH groups per molecule and has a viscosity in the range of 0.005 to 10 Pa·s at 25°C,
(C) a catalytic amount of platinum group metal catalyst,
(D) 0 to 100,000 parts by weight of organic solvent,
(E) 0.1 to 10 parts by weight of ionic compound, and
(F) 1 to 30 parts by weight of compound selected from the following (F-1), (F-2) and (F-3):

(F-1) compound having (f1) and (f3),
(F-2) compound having (f2) and (f3), and
(F-3) compound having (f1), (f2) and (f3),

wherein (f1) is a hydrosilylation reactive group, (f2) is a polysiloxane structure, and (f3) is a polyoxyethylene chain.

2. Silicone composition for release paper or release film of claim 1 wherein component (B) is present in such an amount that the moles of silicon-bonded hydrogen atoms is 3 to 60 times the moles of alkenyl groups in component (A).

3. Silicone composition for release paper or release film of claim 1 or 2, further comprising (G) a migratory component.

4. Release paper or release film comprising a paper or film substrate and a release layer formed on the substrate, the release layer being a cured product of a silicone composition of any one of claims 1 to 3.

## INTERNATIONAL SEARCH REPORT

International application No.
PCT/JP2017/035208

A. CLASSIFICATION OF SUBJECT MATTER
*C09K3/00*(2006.01)i, *B32B27/00*(2006.01)i, *C08L83/07*(2006.01)i

According to International Patent Classification (IPC) or to both national classification and IPC

B. FIELDS SEARCHED

Minimum documentation searched (classification system followed by classification symbols)
C09K3/00, C09K3/16, B32B1/00-43/00, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-148030 A (Sanyo Chemical Industries, Ltd.), 18 August 2016 (18.08.2016), claims; paragraph [0052]; examples (Family: none) | 1-4 |
| Y | JP 2015-20329 A (Fujimori Kogyo Co., Ltd.), 02 February 2015 (02.02.2015), claims; paragraph [0037]; examples & CN 104293222 A & KR 10-2015-0010576 A & TW 201504388 A & KR 10-2016-0045655 A & TW 201716532 A | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 October 2017 (19.10.17) | 31 October 2017 (31.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/035208

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-79301 A (Shin-Etsu Chemical Co., Ltd.), 16 May 2016 (16.05.2016), claims; paragraphs [0001], [0054]; examples 12, 13 & WO 2016/059841 A1 & TW 201630984 A & KR 10-2017-0068502 A & CN 107075340 A & EP 3208324 A1 claims; paragraphs [0001], [0073]; examples 12, 13 | 1-4 |
| Y | JP 5-320625 A (Marubishi Oil Chemical Co., Ltd.), 03 December 1993 (03.12.1993), claims; paragraph [0004]; examples (Family: none) | 1-4 |
| Y | JP 2016-27128 A (Sanyo Chemical Industries, Ltd.), 18 February 2016 (18.02.2016), claims (Family: none) | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2636968 B
- JP 2002241613 A
- WO 2005052058 A
- JP 2006249303 A
- JP 2007254730 A
- JP 2008045061 A
- JP 2011032382 A
- JP 2016027128 A